(19)

Europäisches
Patentamt
European
Patent Office
Office européen
des brevets

(11) **EP 4 015 396 A1**

(12) **EUROPEAN PATENT APPLICATION**
published in accordance with Art. 153(4) EPC

(43) Date of publication:
**22.06.2022  Bulletin 2022/25**

(21) Application number: **20853282.0**

(22) Date of filing: **13.08.2020**

(51) International Patent Classification (IPC):
***B64F 1/305*** (2006.01)

(52) Cooperative Patent Classification (CPC):
**B64F 1/305**

(86) International application number:
**PCT/CN2020/108962**

(87) International publication number:
**WO 2021/027888 (18.02.2021 Gazette 2021/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.08.2019  CN 201910750379**

(71) Applicant: **Shenzhen CIMC-TIANDA Airport
Support Ltd.
Shenzhen, Guangdong 518103 (CN)**

(72) Inventors:
• **LEI, Anliang**
**Shenzhen, Guangdong 518103 (CN)**
• **XIANG, Wei**
**Shenzhen, Guangdong 518103 (CN)**
• **LIANG, Lexian**
**Shenzhen, Guangdong 518103 (CN)**
• **DENG, Lan**
**Shenzhen, Guangdong 518103 (CN)**

(74) Representative: **Potter Clarkson
The Belgrave Centre
Talbot Street
Nottingham NG1 5GG (GB)**

(54) **METHOD FOR PREVENTING BOARDING BRIDGE FROM COLLIDING WITH WING**

(57)  The present disclosure discloses a method for preventing a boarding bridge from colliding with an aircraft wing, where, including: establishing an outer contour model of the boarding bridge and an anti-collision line model in a first coordinate system, the anti-collision line model is used to simulate a set of anti-collision lines between the boarding bridge and the aircraft wing; the outer contour model simulating a movement process of an outer contour of the boarding bridge in real time during a process of the boarding bridge docking with an aircraft, and when a minimum distance between the outer contour model and the anti-collision line model is less than a first threshold, then controlling the boarding bridge to stop operating. The method is used to avoid collision between the boarding bridge and the aircraft wing.

```
                                                          ┌─ S10
┌─────────────────────────────────────────┐
│  Establishing an outer contour model of the │
│  boarding bridge and an anti-collision line model │
└─────────────────────────────────────────┘
                    │
                    ▼
                                                          ┌─ S20
┌─────────────────────────────────────────┐
│  When the minimum distance between the outer │
│  contour model and the anti-collision line model is │
│  less than a first threshold, then controlling the │
│  boarding bridge to stop operating │
└─────────────────────────────────────────┘
```

FIG. 2

EP 4 015 396 A1

# Description

## CROSS REFERENCE

This disclosure claims the priority of the Chinese patent application filed on August 14, 2019, with the application number 201910750379.0 and titled "Method For Preventing Boarding Bridge From Colliding With Wing", the entire content of this Chinese patent application is incorporated herein by reference in its entirety.

## TECHNICAL FIELD

The present disclosure generally relates to a boarding bridge technology, and in particular, to a method for preventing a boarding bridge from colliding with an aircraft wing.

## BACKGROUND

The boarding bridge is an important ground equipment for docking with an aircraft. During the docking process of the boarding bridge, it is necessary to prevent collision with the aircraft wings.

In order to prevent the boarding bridge from colliding with the aircraft wings, an ultrasonic sensor is usually installed on the right side of the bridgehead of the boarding bridge. The ultrasonic sensor is used to detect obstacles, such as aircraft wings. When the ultrasonic sensor detects that the aircraft wing is near the boarding bridge, it is forbidden to continue to dock with the aircraft wing.

However, the detection range of this ultrasonic sensor is very limited, the detection range is usually a spindle-shaped region with a maximum radius of 0.3 meters. In fact, the possible collision region is far more than the right side of the bridgehead. For example, the right side and the front edge of the boarding bridge may collide with the aircraft, so a more rigorous collision prevention solution is needed.

The above information disclosed in the background section is only for enhancing the understanding of the background of the present disclosure, so it may include information that does not constitute prior art known to those of ordinary skill in the art.

## SUMMARY

A series of concepts in simplified form were introduced in the summary of the disclosure, which will be explained in further detail in the detailed embodiment section. The content of the summary does not mean trying to define the key features and necessary technical features of the technical solution claimed to be protected, nor does it mean trying to determine the protection scope of the technical solution claimed to be protected.

A main object of the present disclosure is to overcome at least one of the above-mentioned defects of the prior art, and to provide a method for preventing a boarding bridge from colliding with an aircraft wing, which includes:

establishing an outer contour model of the boarding bridge and an anti-collision line model in a first coordinate system, the anti-collision line model is used to simulate a set of anti-collision lines between the boarding bridge and the aircraft wing;

the outer contour model simulating a movement process of an outer contour of the boarding bridge in real time during a process of the boarding bridge docking with an aircraft, and when a minimum distance between the outer contour model and the anti-collision line model is less than a first threshold, then controlling the boarding bridge to stop operating.

According to an embodiment of the disclosure, the outer contour model is characterized by a plurality of outer contour feature points and a plurality of outer contour feature line segments, the plurality of outer contour feature points and the plurality of outer contour feature line segments are enclosed to form a side edge contour of the boarding bridge, and the anti-collision line model is formed by sequentially connecting a plurality of anti-collision line segments.

According to an embodiment of the disclosure, calculating the minimum distance between the outer contour model and the anti-collision line model, which includes:

calculating first shortest distances from each outer contour feature point and each end point of the outer contour feature line segments to each of the anti-collision line segments;

calculating second shortest distances from end points of each of the anti-collision line segments to each of the outer contour feature line segments;

selecting one distance with a smallest value from all the first shortest distances and all the second shortest distances as the minimum distance.

According to an embodiment of the disclosure, a process of calculating the first shortest distances includes:

setting the outer contour feature point or one end point of an outer contour feature line segment as point a, and two end points of an anti-collision line segment as point b and point c, respectively;

calculating lengths of a line segment ab, a line segment bc and a line segment ac according to coordinate values of the three points a, b and c in the first coordinate system;

calculating an angle value of $\angle abc$ according to the lengths of line segment ab, line segment bc and line segment ac, and judging whether $\angle abc$ is greater

than 90° ;

in case that ∠abc is greater than 90° , a first shortest distance is equal to a length of line segment ab, in case that ∠abc is not greater than 90° , then judging whether ∠acb is greater than 90° ;

in case that ∠acb is greater than 90° , the first shortest distance is equal to a length of line segment ac;

in case that ∠acb is not greater than 90° , the first shortest distance is equal to a value of the length of line segment ab times a sine value of ∠abc.

According to an embodiment of the disclosure, a process of calculating the second shortest distances includes:

setting one end point of an anti-collision line segment as point a, and two end points of an outer contour feature line segment as point b and point c, respectively,

calculating lengths of line segment ab, line segment bc and line segment ac according to coordinate values of the three points a, b and c in the first coordinate system;

calculating an angle value of ∠abc according to the lengths of line segment ab, line segment bc and line segment ac, and judging whether ∠abc is greater than 90° ;

in case that ∠abc is greater than 90° , a second shortest distance is equal to a length of line segment ab, in case that ∠abc is not greater than 90° , then judging whether ∠acb is greater than 90° ;

in case that ∠acb is greater than 90° , the second shortest distance is equal to a length of line segment ac; in case that ∠acb is not greater than 90° , the second shortest distance is equal to an value of a length of line segment ab times a sine value of abc.

According to an embodiment of the disclosure, an x-axis and a y-axis of the first coordinate system are parallel to a ground;

when calculating the lengths of the line segment ab, the line segment bc and the line segment ac according to coordinate values of the three points a, b and c in the first coordinate system, a following formula is used for calculation:

$$l_{ab} = \sqrt{\left(x_a - x_b\right)^2 + \left(y_a - y_b\right)^2}$$

Where, $l_{ab}$ is the length of line segment ab; $x_a$ is a coordinate of point a on the x-axis; $x_b$ is a coordinate of point b on the x-axis; $y_a$ is a coordinate of point a on the y-axis; $y_b$ is a coordinate of point b on the y-axis;

$$l_{bc} = \sqrt{\left(x_b - x_c\right)^2 + \left(y_b - y_c\right)^2}$$

Where, $l_{bc}$ is the length of line segment bc; $x_c$ is a coordinate of point c on the x-axis; $x_b$ is the coordinate of point b on the x-axis; $y_c$ is a coordinate of point c on the y-axis; $y_b$ is the coordinate of point b on the y-axis;

$$l_{ac} = \sqrt{\left(x_a - x_c\right)^2 + \left(y_a - y_c\right)^2}$$

Where, $l_{ac}$ is the length of line segment ac; $x_c$ is the coordinate of point c on the x-axis; $x_a$ is the coordinate of point a on the x-axis; $y_c$ is the coordinate of point c on the y-axis; $y_a$ is the coordinate of point a on the y-axis.

According to an embodiment of the disclosure, the anti-collision lines include a first anti-collision line segment extending from a front position of a tail end of the aircraft wing to a front position of an engine closest to a cabin door, and a second anti-collision line segment extending from an end of the first anti-collision line segment near the cabin door to a side of the cabin door away from an aircraft nose.

According to an embodiment of the disclosure, the outer contour feature line segments include a first line segment and a second line segment respectively provided on both sides of a bridgehead of the boarding bridge, a third line segment correspondingly disposed at a front end of the bridgehead and connected to the first line segment and the second line segment, and a fourth line segment and a fifth line segment respectively provided on both sides of a telescoping tunnel of the boarding bridge.

According to an embodiment of the disclosure, the plurality of outer contour feature points are sequentially arranged along an end portion of one end of the telescoping tunnel near the bridgehead.

According to an embodiment of the disclosure, the method further includes:

in case that the minimum distance between the outer contour model and the anti-collision line model is not less than a first threshold, then further judging whether the minimum distance is less than a second threshold, where the second threshold is greater than the first threshold;

in case that the minimum distance is less than the second threshold, controlling the boarding bridge to decelerate.

According to an embodiment of the disclosure, a step of establishing the anti-collision line model in the first coordinate system includes:

establishing a first coordinate system and a second coordinate system, both which are fixed relative to a ground, and obtaining ground identification parameters in the first coordinate system and the second coordinate system, respectively;

acquiring coordinates of a plurality of anti-collision feature points pre-established in the second coordinate system;

performing coordinate transformation on the anti-collision feature points according to the ground identification parameters in the first coordinate system and the second coordinate system to obtain coordinates of the plurality of anti-collision feature points in the first coordinate system;

connecting the anti-collision feature points in the first coordinate system in sequence according to a preset order to obtain the anti-collision line model in the first coordinate system.

According to an embodiment of the disclosure, before establishing the anti-collision line model in the first coordinate system, the method further includes:

ground identifications are used to guide the aircraft to park at the predetermined parking position, correcting coordinates of the plurality of anti-collision feature points in the second coordinate system according to a degree to which the aircraft deviates from the ground identifications when the aircraft is parked.

It can be seen from the above technical solutions that the advantages and positive effects of the present disclosure are as follows:

In the process of simulating the movement of the outer contour of the boarding bridge, consider the distance between the overall outer contour model and the anti-collision line model, that is, the distance between the point of the outer contour model closest to the anti-collision line model and the anti-collision line model, so that each part of the boarding bridge can be prevented from colliding with the aircraft wing.

BRIEF DESCRIPTION OF THE DRAWINGS

Through considering the following detailed description of preferred embodiments of the present disclosure in conjunction with the accompanying drawings, various objects, features, and advantages of the present disclosure will become more apparent. The accompanying drawings are merely exemplary illustrations of the present disclosure and are not necessarily drawn to scale. In the accompanying drawings, the same reference numerals always denote the same or similar parts. Where:

FIG. 1 is a schematic top view of a boarding bridge in an embodiment of the disclosure;
FIG. 2 is a flowchart of a method for preventing a boarding bridge from colliding with an aircraft wing in an embodiment of the disclosure;
FIG. 3 is a schematic top view of an aircraft parked at a predetermined parking position in an embodiment of the present disclosure;

FIG. 4 is a schematic top view of an anti-collision line in an embodiment of the present disclosure;
FIG. 5 is a schematic top view of an outer contour model and an anti-collision line model in an embodiment of the present disclosure.

DETAILED DESCRIPTION

Exemplary embodiments will now be described more fully with reference to the drawings. However, the exemplary embodiments can be implemented in various forms and should not be construed as being limited to the embodiments set forth herein; rather, these embodiments are provided so that this disclosure will be comprehensive and complete, and will fully convey the concepts of the exemplary embodiments to those skilled in the art. The same reference numerals in the drawings denote the same or similar structures, and thus their repeated description will be omitted.

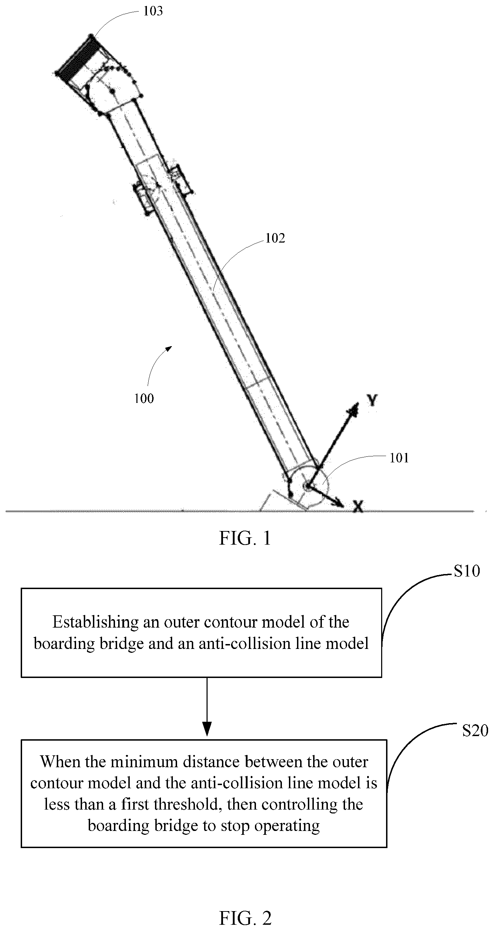

Referring to FIG. 1, the boarding bridge 100 includes a rotunda column, a rotunda 101, a telescoping tunnel 102, a bridgehead 103, an elevating leg, a drive unit, and a control unit. The rotunda 101 may be installed on a terminal building, or may also be installed on a gallery communicating with the terminal building. The rotunda column is provided at the bottom of the rotunda 101, and is used to support the rotunda 101. The telescoping tunnel 102 is a stretchable passage, and the telescoping tunnel 102 is generally in a shape of a straight bar. One end of the telescoping tunnel 102 is installed on the rotunda 101, and the telescoping tunnel 102 forms a rotational connection with the terminal building through the rotunda 101. The bridgehead 103 is installed on the other end of the telescoping tunnel 102. The bridgehead 103 can rotate relative to the telescoping tunnel 102. The drive unit is disposed below the telescoping tunnel 102, and the elevating leg is disposed between the drive unit and the telescoping tunnel 102. Both ends of the elevating leg are connected to the drive unit and the telescoping tunnel 102, respectively. The elevating leg supports the telescoping tunnel 102, and the elevating leg can drive the telescoping tunnel 102 to swing up and down to raise or lower the bridgehead 103. The elevating leg may be a hydraulic elevating table. The drive unit is provided with wheels and a power device for driving the wheels to roll. The drive unit can travel on the ground to drive the telescoping tunnel 102 to stretch out and draw back in the horizontal direction, thereby driving the bridgehead 103 to move in the horizontal direction. The control unit is used to control the operation of the boarding bridge 100. The control unit may be a programmable logic controller, and may also be a computer.

FIG. 2 shows the method for preventing the boarding bridge from colliding with the aircraft wings. The method for preventing the boarding bridge from colliding with the aircraft wing 303 is implemented by a control unit. The method for preventing the boarding bridge from colliding with the aircraft wing 303 includes a step S10 and a step S20.

Step S10: establishing an outer contour model 600 of the boarding bridge 100 and an anti-collision line model 500a in a first coordinate system. The anti-collision line model 500a is used to simulate a set of anti-collision lines 500 between the boarding bridge 100 and the aircraft wing 303.

The anti-collision lines 500 are a set of virtual lines provided between the aircraft wing 303 and the boarding bridge 100. The anti-collision lines 500 are lines preset in the system, and each aircraft type corresponds to one kind of anti-collision lines 500. According to the aircraft type, the anti-collision lines 500 matching the aircraft type can be obtained. The anti-collision lines 500 are used to delimit an extreme position of the boarding bridge 100 in the direction of moving to the aircraft wing 303 to avoid the collision of the boarding bridge 100 and the aircraft wing 303. The relative position between the anti-collision line 500 and the aircraft may be preset.

The outer contour model 600 of the boarding bridge 100 is established according to the outer contour shape of the boarding bridge 100 and is used to simulate the outer contour of the boarding bridge 100. The ratio of the outer contour model 600 to the outer contour of the boarding bridge 100 may be one to one.

The anti-collision line model 500a is used to simulate the anti-collision lines 500 in the first coordinate system. The ratio of the anti-collision line model 500a to the anti-collision line 500 may be one to one.

The initial positional relationship between the outer contour model 600 and the anti-collision line model 500a is determined according to the initial positional relationship between the boarding bridge 100 and the anti-collision lines 500.

Step S20: the outer contour model 600 simulating the movement process of the outer contour of the boarding bridge in real time during the process of the boarding bridge 100 docking with the aircraft, and when the minimum distance between the outer contour model 600 and the anti-collision line model 500a is less than a first threshold, then controlling the boarding bridge 100 to stop operating.

The outer contour model 600 simulates the movement process of the outer contour of the boarding bridge in real time, and the movement speed and attitude change of the outer contour model 600 are consistent with the outer contour of the boarding bridge. The first threshold is a preset value, and the first threshold may be considered according to the safety distance to be maintained between the boarding bridge 100 and the aircraft wing 303, that is, when the distance between the boarding bridge 100 and the anti-collision line 500 is equal to the first threshold, the distance between the boarding bridge 100 and the aircraft wing 303 is greater than or equal to the safety distance. When the minimum distance between the outer contour model 600 and the anti-collision line model 500a is less than the first threshold, it means that the boarding bridge 100 has a risk of colliding with the aircraft wing 303 over the anti-collision line 500, and controlling the boarding bridge 100 being stopped when the minimum distance described above is less than the first threshold, so that the danger can be avoided.

During the process of simulating the movement of the boarding bridge 100, considering the distance between the entire outer contour model 600 and the anti-collision line model 500a, that is, the distance between the point of the outer contour model 600 closest to the anti-collision line model 500a and the anti-collision line model 500a, thereby avoiding collision of each part of the boarding bridge 100 with the aircraft wing 303.

Further, in step S10, the method for establishing the anti-collision line model 500a in the first coordinate system includes steps S11 to S14.

Step S11: establishing a first coordinate system and a second coordinate system, both of which are fixed relative to the ground, and obtaining ground identification parameters in the first coordinate system and the second coordinate system, respectively.

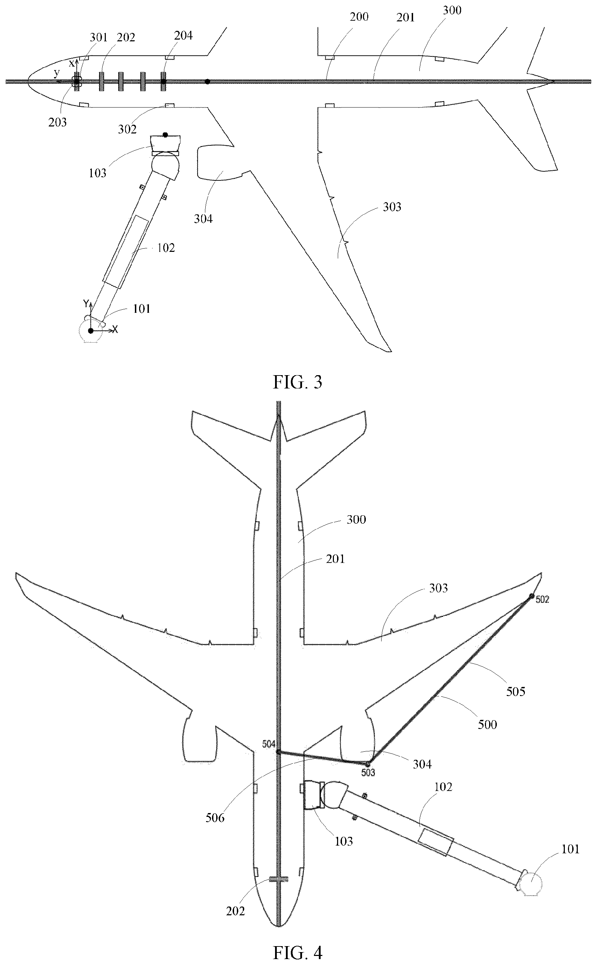

Referring to FIG. 3, a ground identification 200 is provided on the ground of the airport apron. The ground identification 200 is used to guide the aircraft 300 to dock at a predetermined parking position. The ground identification 200 may be a pattern formed by a plurality of parking lines 202 intersecting with a guide line 201, and the parking lines 202 are all perpendicular to the guide line 201. The guide line 201 is used to guide the aircraft 300 to travel on the airport apron along a predetermined route. The parking lines 202 are used to indicate the docking position of the aircraft 300. The nose wheel 203 of the aircraft 300 is located at the intersection of the designated parking line 202 and the guide line 201, moreover, when the longitudinal axis of the aircraft 300 is substantially parallel to the guide line 201, the aircraft 300 is docked at a predetermined parking position, when the accuracy deviation range of the parking position is within the allowable error range of the airport, the aircraft parking position is qualified. The allowable error range is: the deviation absolute value of the axis centerline of the nose wheel 203 and the centerline of the parking line 202 is less than 0.5 meters, the deviation absolute value of the axis midpoint of the nose wheel 203 and the centerline of the aircraft guide line 201 is less than 0.3 meters, and the angle between the longitudinal axis of the aircraft 300 and the centerline of the guide line 201 of the aircraft is less than 2 degrees.

The first coordinate system and the second coordinate system may be Cartesian coordinates or spherical coordinate systems. In the present embodiment, both the first coordinate system and the second coordinate system are Cartesian coordinates.

The first coordinate system includes an x-axis, a y-axis, and a z-axis. The x-axis and the y-axis may be parallel to the ground, and the z-axis may be perpendicular to the ground with the positive direction facing upward. The z-axis may be coaxial with the axis of the rotunda 101. The origin can be provided on the ground.

After the first coordinate system is established, the ground identification parameters of the ground identification 200 in the first coordinate can be obtained by a method of direct measurement. In the present embodiment, the ground identification 200 is characterized by two identification feature points. The two identification feature points are a first identification feature point 203 and a second identification feature point 204, the first identification feature point 203 is an intersection of the centerline of the first parking line 202 and the centerline of the guide line 201, and the second identification feature point 204 is the intersection of the centerline of the last parking line 202 and the centerline of the guide line 201. The ground identification parameters include the coordinates of the first identification feature point 203 and the second identification feature point 204 in the first coordinate system.

The ground identification parameters further include the coordinates of the first identification feature point 203 and the second identification feature point 204 in the second coordinate system. The second coordinate system includes an X-axis, a Y-axis and a Z-axis. Both the X-axis and Y-axis are parallel to the ground. The Z-axis is perpendicular to the ground and the positive direction thereof is perpendicular to the ground. The X-axis of the second coordinate system may be perpendicular to the guide line 201, and the Y-axis of the second coordinate system may be parallel to the guide line 201. The origin of the second coordinate system is provided at the first identification feature point 203, which is on the guide line 201 and the parking line 202, and the second identification feature point 204 passes through the Y-axis. The coordinates of the second identification feature point 204 can be obtained by measuring a distance between the first identification feature point 203 and the second identification feature point 204.

Since the ground identification parameters in the first and second coordinate systems are obtained, conditions are provided for coordinate conversion between the first coordinate system and the second coordinate system at any point.

Step S12: acquiring the coordinates of a plurality of anti-collision feature points pre-established in the second coordinate system.

The aircraft model is pre-established in the second coordinate system, and is represented by the coordinates in the second coordinate system. Different types of aircraft 300 can be established with different types of aircraft models. The dimensions of the aircraft model are consistent with the actual dimensions. When establishing the aircraft model, the ground identification 200 is used as a reference to obtain the aircraft model parameters for simulating the aircraft 300 parked at a predetermined parking position. In this way, the relative positional relationship between the ground identification 200 and the aircraft model is determined.

Referring to FIG. 4, the aircraft model parameters include the coordinates of a plurality of anti-collision feature points 502, 503, and 504 in the second coordinate system.

The plurality of anti-collision feature points 502, 503, and 504 are connected in sequence through straight lines to obtain an anti-collision line 500. The plurality of anti-collision feature points 502, 503, 504 are used to characterize the position and shape of the anti-collision line 500. In the present embodiment, the anti-collision line 500 includes a first anti-collision line segment 505 and a second anti-collision line segment 506. The projections of the first anti-collision line segment 505 and the second anti-collision line segment 506 on the ground may be tangent to the projection of the engine 304 on the ground, respectively. The first anti-collision line segment 505 extends from a front position of the tail end of the aircraft wing 303 to the front position of the engine 304 closest to the cabin door 302, the second anti-collision line segment 506 extends from an end of the first anti-collision line segment 505 near the cabin door 302 to a side of the cabin door 302 away from the aircraft nose. Among them, the first anti-collision line segment 505 is located in front of all engines 304 at the side of the cabin door 302. In the present embodiment, there are three anti-collision feature points, a first anti-collision feature point 502 is located in front of the tail end of the aircraft wing 303, a second anti-collision feature point 503 is located in front of the engine 304 closest to the cabin door 302, and a third anti-collision feature point 504 is located at the side of the cabin door 302 facing away from the aircraft nose, and these three anti-collision feature points are connected in sequence to obtain the anti-collision line 500.

Step S13: Performing coordinate transformation on the anti-collision feature points according to the ground identification parameters in the first coordinate system and the second coordinate system to obtain coordinates of the plurality of anti-collision feature points in the first coordinate system.

Since the parameters of the ground identification 200 in the first coordinate system and the second coordinate system are obtained in advance, that is, the coordinate of the first identification feature point 203 in the first and second coordinate systems and the coordinate of the second identification feature point 204 in the first and second coordinate systems are obtained in advance, and the z-axis of the first coordinate system and the Z-axis of the second coordinate system are parallel to each other, the coordinates of the multiple anti-collision feature points 502, 503, and 504 in the second coordinate system can be transformed to obtain the coordinates of the multiple anti-collision feature points 502, 503 and 504 in the first coordinate system. So that the aircraft model parameters are transformed to the first coordinate system, thereby obtaining the coordinates of the anti-collision feature points in the first coordinate system.

Step S14: connecting the anti-collision feature points in the first coordinate system in sequence according to a preset order to obtain the anti-collision line model 500a in the first coordinate system.

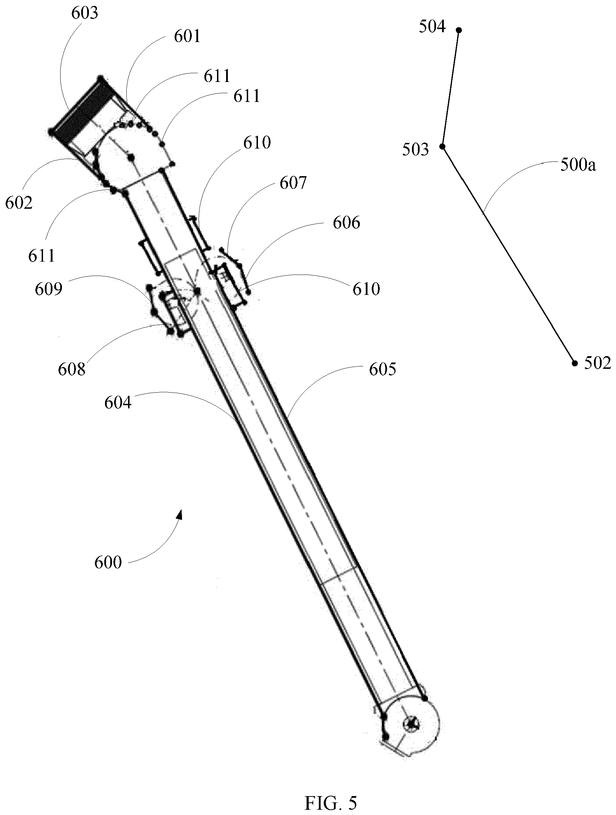

Referring to FIG. 5, after obtaining the coordinates of the anti-collision feature points 502, 503 and 504 in the first coordinate system, the positions of the anti-collision feature points 502, 503 and 504 can be determined in the first coordinate system. In the first coordinate system, the plurality of anti-collision feature points 502, 503, and 504 are sequentially connected in a predetermined order to obtain an anti-collision line model 500a in the first coordinate system. Specifically, the anti-collision feature point 502 is connected to the anti-collision feature point 503 through a straight line segment, and the anti-collision feature point 503 is then connected to the anti-collision feature point 504 through a straight line segment.

The advantages of establishing the anti-collision line model 500a in the first coordinate system through S11~S14 are: a variety of anti-collision line models 500a may be pre-established in the second coordinate system according to aircrafts with different aircraft types to form a anti-collision line set, and the aircraft types correspond to the anti-collision line models 500a in the second coordinate system one by one. When the boarding bridge 100 is docked to the aircraft, the aircraft type is automatically obtained from other systems or obtained by manually input, and the anti-collision line model 500a is obtained immediately according to the aircraft type, without having to temporarily draw out the anti-collision line model 500a in the first coordinate system, which greatly accelerates the speed of establishing the anti-collision line model 500a in the first coordinate system.

Further, before establishing the anti-collision line models 500a in the first coordinate system, the method further includes:

correcting the coordinates of the plurality of anti-collision feature points in the second coordinate system according to the degree to which the aircraft deviates from the ground identification when the aircraft is parked.

The ground identification is used to guide the aircraft to park at the predetermined parking position. After the pilot parking the aircraft in the predetermined parking position, the aircraft may not be exactly at the optimal position, that is, it cannot be guaranteed that the axis center line of the nose wheel 203 is aligned with the center line of the parking line 202, and the longitudinal axis of the aircraft 300 is aligned with the center line of the aircraft guide line 201. Therefore, it is necessary to consider the deviation of the aircraft parking, that is, the degree of the aircraft deviating from the ground identification. Correct the coordinate values of the plurality of the anti-collision feature points in the second coordinate system according to the degree of the aircraft deviating from the ground identification, that is, the degree and direction of deviation of the plurality of the anti-collision feature points in the second coordinate system are consistent with the degree and direction of deviation of the aircraft from the ground identification. For example, if the overall position where the aircraft is parked is deviated by 10cm to the north, the coordinates of the plurality of the anti-collision feature points in the second coordinate system are deviated by 10cm to the north.

Further, the outer contour model 600 is characterized by a plurality of outer contour feature points 611 and a plurality of outer contour feature line segments, the plurality of outer contour feature points 611 and the plurality of outer contour feature line segments are enclosed to form the side edge contour of the boarding bridge 100, and the anti-collision line model 500a is formed by sequentially connecting a plurality of anti-collision line segments.

The outer contour feature point 611 and the outer contour feature line segments are used to characterize the outer contour model 600, and the anti-collision line model 500a is formed by sequentially connecting a plurality of the anti-collision line segments, which can reduce the calculation amount and accelerate the calculation speed.

In this embodiment, the outer contour feature line segments include a first line segment 601, a second line segment 602, a third line segment 603, a fourth line segment 604 and a fifth line segment 605. The first line segment 601 and the second line segment 602 are respectively provided on both sides of the bridgehead 103 of the boarding bridge 100. The third line segment 603 is correspondingly disposed at the front end of the bridgehead 103, and the two ends thereof are respectively connected to the first line segment 601 and the second line segment 602. The fourth line segment 604 and the fifth line segment 605 are respectively provided on both sides of the telescoping tunnel 102 of the boarding bridge 100.

The first to the third line segments 601, 602 and 603 substantially enclose to form the side edges of the bridgehead 103, and the fourth line segment 604 and the fifth line segment 605 respectively enclose to form the side edges of the telescoping tunnel 102. In this way, the overall contour of the boarding bridge 100 is roughly drawn. Setting the first to fifth line segments 601, 602, 603, 604 and 605 can prevent the telescoping tunnel 102 and the bridgehead 103 from colliding with the aircraft wing 303.

The outer contour feature line segments also include a sixth line segment 606, a seventh line segment 607, an eighth line segment 608, and a ninth line segment 609. The sixth line segment 606 and the seventh line segment 607 enclose to form the right part of the protective device of the drive unit protruding from the projection of the telescoping tunnel 102, the eighth line segment 608 and the ninth line segment 609 enclose to form the left part of the protective device protruding from the projection of the telescoping tunnel 102.

Setting the sixth to the ninth line segments can prevent the protective device of the boarding bridge 100 from colliding with the aircraft wing 303.

The outer contour feature line segments include a plurality of tenth line segments 610. The plurality of tenth line segments 610 are located at outside the telescoping tunnel 102. The tenth line segments are used to characterize the outer contour of other devices on the boarding bridge 100 protruding from the projection of the telescoping tunnel 102.

Setting the tenth line segments 610 can prevent these devices protruding from the projection of the telescoping tunnel 102 from colliding with the aircraft wing 303.

Further, a plurality of outer contour feature points 611 are sequentially arranged along the end portion of one end of the telescoping tunnel 102 near the bridgehead 103.

During the process of the bridgehead 103 swinging, the end portion of one end of the telescoping tunnel 102 near the bridgehead 103 can be exposed, thus after the plurality of outer contour feature points 611 are arranged at the end portion, the end portion can be avoided to collide with the aircraft wing 303.

Further, in the step S20, the minimum distance between the outer contour model 600 and the anti-collision line model 500a is calculated, including steps S21-S23.

S21: calculating first shortest distances from each outer contour feature point 611 and each end point of the outer contour feature line segment to each of the anti-collision line segments.

S22: calculating second shortest distances from the end point of each of the anti-collision line segments to each of the outer contour feature line segments.

S23: selecting one distance with a smallest value from all the first shortest distances and all the second shortest distances as the minimum distance.

Further, in step S21, the process of calculating the first shortest distances includes:

Setting the outer contour feature point 611 or the end point of the outer contour feature line segment as point a, and two end points of the anti-collision line segment as point b and point c, respectively.

Calculating the lengths of a line segment ab, a line segment bc and a line segment ac according to the coordinate values of the three points a, b and c in the first coordinate system.

When calculating the lengths of the line segment ab, the line segment bc and the line segment ac, the following formula is used for calculation:

$$l_{ab} = \sqrt{\left(x_a - x_b\right)^2 + \left(y_a - y_b\right)^2}$$

Where, $l_{ab}$ is the length of line segment ab; $x_a$ is the coordinate of point a on the x-axis; $x_b$ is the coordinate of point b on the x-axis; $y_a$ is the coordinate of point a on the y-axis; $y_b$ is the coordinate of point b on the y-axis;

$$l_{bc} = \sqrt{\left(x_b - x_c\right)^2 + \left(y_b - y_c\right)^2}$$

Where, $l_{bc}$ is the length of line segment bc; $x_c$ is the coordinate of point c on the x-axis; $x_b$ is the coordinate of point b on the x-axis; $y_c$ is the coordinate of point c on the y-axis; $y_b$ is the coordinate of point b on the y-axis;

$$l_{ac} = \sqrt{\left(x_a - x_c\right)^2 + \left(y_a - y_c\right)^2}$$

Where, $l_{ac}$ is the length of line segment ac; $x_c$ is the coordinate of point c on the x-axis; $x_a$ is the coordinate of point a on the x-axis; $y_c$ is the coordinate of point c on the y-axis; $y_a$ is the coordinate of point a on the y-axis.

Calculating the angle value of ∠abc according to the lengths of line segment ab, line segment bc and line segment ac, and judging whether ∠abc is greater than 90°

The value of ∠abc can be calculated by the following formula:

$$\angle abc = \arccos\left(\frac{l_{ab}^2 + l_{bc}^2 - l_{ac}^2}{2 l_{ab} l_{bc}}\right)$$

Where, $l_{ab}$ is the length of line segment ab; $l_{bc}$ is the length of line segment bc; $l_{ac}$ is the length of line segment ac;

In case that ∠abc is greater than 90° , the first shortest distance is equal to the length of line segment ab, in case that ∠abc is not greater than 90° , then judge whether ∠acb is greater than 90° ;

The value of ∠acb can be calculated by the following formula:

$$\angle acb = \arccos\left(\frac{l_{ac}^2 + l_{bc}^2 - l_{ab}^2}{2 l_{ac} l_{bc}}\right)$$

Where, $l_{ab}$ is the length of line segment ab; $l_{bc}$ is the length of line segment bc; $l_{ac}$ is the length of line segment ac;

In case that ∠acb is greater than 90° , the first shortest distance is equal to the length of line segment ac; in case that ∠acb is not greater than 90° , the first shortest distance is equal to the value of the length of line segment ab times the sine value of abc.

In this way, the first shortest distance between the outer contour feature point 611 or an end point of the outer contour feature line segment and the anti-collision line segment is calculated.

Further, in step S22, the process of calculating the second shortest distances includes:

Setting one end point of the anti-collision line segment as point a, and the two end points of the outer contour feature line segment as point b and point c, respectively.

Calculating the lengths of line segment ab, line segment bc and line segment ac according to the coordinate values of the three points a, b and c in the first coordinate system;

When calculating the lengths of line segment ab, line segment bc and line segment ac, the following formula is used for calculation:

$$l_{ab} = \sqrt{\left(x_a - x_b\right)^2 + \left(y_a - y_b\right)^2}$$

Where, $l_{ab}$ is the length of line segment ab; $x_a$ is the coordinate of point a on the x-axis; $x_b$ is the coordinate of point b on the x-axis; $y_a$ is the coordinate of point a on the y-axis; $y_b$ is the coordinate of point b on the y-axis;

$$l_{bc} = \sqrt{\left(x_b - x_c\right)^2 + \left(y_b - y_c\right)^2}$$

Where, $l_{bc}$ is the length of line segment bc; $x_c$ is the coordinate of point c on the x-axis; $x_b$ is the coordinate of point b on the x-axis; $y_c$ is the coordinate of point c on the y-axis; $y_b$ is the coordinate of point b on the y-axis;

$$l_{ac} = \sqrt{\left(x_a - x_c\right)^2 + \left(y_a - y_c\right)^2}$$

Where, $l_{ac}$ is the length of line segment ac; $x_c$ is the coordinate of point c on the x-axis; $x_a$ is the coordinate of point a on the x-axis; $y_c$ is the coordinate of point c on the y-axis; $y_a$ is the coordinate of point a on the y-axis.

Calculating the angle value of $\angle abc$ according to the lengths of line segment ab, line segment bc and line segment ac, and judging whether $\angle abc$ is greater than 90° ;

The value of $\angle abc$ can be calculated by the following formula:

$$\angle abc = \arccos\left(\frac{l_{ab}^2 + l_{bc}^2 - l_{ac}^2}{2 l_{ab} l_{bc}}\right)$$

Where, $l_{ab}$ is the length of line segment ab; $l_{bc}$ is the length of line segment bc; $l_{ac}$ is the length of line segment ac;

In case that $\angle abc$ is greater than 90° , the second shortest distance is equal to the length of line segment ab, in case that $\angle abc$ is not greater than 90° , then judge whether $\angle acb$ is greater than 90° ;

In case that $\angle acb$ is greater than 90° , the second shortest distance is equal to the length of line segment ac; in case that $\angle acb$ is not greater than 90° , the second shortest distance is equal to the value of the length of line segment ab times the sine value of $\angle abc$.

The value of $\angle acb$ can be calculated by the following formula:

$$\angle acb = \arccos\left(\frac{l_{ac}^2 + l_{bc}^2 - l_{ab}^2}{2 l_{ac} l_{bc}}\right)$$

Where, $l_{ab}$ is the length of line segment ab; $l_{bc}$ is the length of line segment bc; $l_{ac}$ is the length of line segment ac.

In this way, the second shortest distance between the end point of the anti-collision line segment and the outer contour feature line segment is calculated.

Further, step S20 further includes: in case that the minimum distance between the outer contour model 600 and the anti-collision line model 500a is not less than a first threshold, then further judging whether the minimum distance between the anti-collision line model 500a and the outer contour model 600 is less than a second threshold, the second threshold is greater than the first threshold.

In case that the minimum distance between the anti-collision line model 500a and the outer contour model 600 is less than the second threshold, controlling the boarding bridge 100 to decelerate.

When the minimum distance between the anti-collision line model 500a and the outer contour model 600 is less than the second threshold, it means that the outer contour model 600 is close to the anti-collision line model 500a, and then deceleration is performed first. Once the minimum distance between the anti-collision line model 500a and the outer contour model 600 is less than the first threshold and then an emergency stop is performed, the boarding bridge 100 can be stopped smoothly due to the deceleration first.

Although the present disclosure has been disclosed with reference to certain embodiments, various changes and modifications can be made to the described embodiments without departing from the scope and category of the present disclosure. Therefore, it should be understood that the present disclosure is not limited to the illustrated embodiments, and its protection scope should be defined by the contents of the appended claims and their equivalent structures and solutions.

**Claims**

1. A method for preventing a boarding bridge from colliding with an aircraft wing, comprising:

   establishing an outer contour model of the boarding bridge and an anti-collision line model in a first coordinate system, the anti-collision line model is used to simulate a set of anti-collision lines between the boarding bridge and the aircraft wing;
   the outer contour model simulating a movement process of an outer contour of the boarding bridge in real time during a process of the boarding bridge docking with an aircraft, and when a minimum distance between the outer contour model and the anti-collision line model is less than a first threshold, then controlling the boarding bridge to stop operating.

2. The method according to claim 1, wherein the outer contour model is **characterized by** a plurality of outer contour feature points and a plurality of outer contour feature line segments, the plurality of outer contour feature points and the plurality of outer contour feature line segments are enclosed to form a side edge contour of the boarding bridge, and the anti-collision line model is formed by sequentially connecting a plurality of anti-collision line segments.

3. The method according to claim 2, wherein calculating the minimum distance between the outer contour model and the anti-collision line model, which comprises:

   calculating first shortest distances from each outer contour feature point and each end point of the outer contour feature line segments to each of the anti-collision line segments;
   calculating second shortest distances from an end point of each of the anti-collision line segments to each of the outer contour feature line segments;
   selecting one distance with a smallest value from all the first shortest distances and all the second shortest distances as the minimum distance.

4. The method according to claim 3, wherein a process of calculating the first shortest distances comprises:

   setting the outer contour feature point or one end point of an outer contour feature line segment as point a, and two end points of an anti-collision line segment as point b and point c, respectively;
   calculating lengths of a line segment ab, a line segment bc and a line segment ac according to coordinate values of the three points a, b and c in the first coordinate system;
   calculating an angle value of ∠abc according to the lengths of line segment ab, line segment bc and line segment ac, and judging whether ∠abc is greater than 90° ;
   in case that ∠abc is greater than 90° , a first shortest distance is equal to a length of line segment ab, in case that ∠abc is not greater than 90° , then judging whether ∠acb is greater than 90° ;
   in case that ∠acb is greater than 90° , the first shortest distance is equal to a length of line segment ac; in case that ∠acb is not greater than 90° , the first shortest distance is equal to a value of the length of line segment ab times a sine value of abc.

5. The method according to claim 3, wherein a process of calculating the second shortest distances comprises:

   setting one end point of an anti-collision line segment as point a, and two end points of an outer contour feature line segment as point b and point c, respectively,
   calculating lengths of line segment ab, line segment bc and line segment ac according to coordinate values of the three points a, b and c in the first coordinate system;
   calculating an angle value of ∠abc according to the lengths of line segment ab, line segment bc and line segment ac, and judging whether ∠abc is greater than 90° ;
   in case that ∠abc is greater than 90° , a second shortest distance is equal to a length of line segment ab, in case that ∠abc is not greater than ∠90° , then judging whether ∠acb is greater than 90° ;
   in case that ∠acb is greater than 90° , the second shortest distance is equal to a length of line segment ac; in case that ∠acb is not greater than 90° , the second shortest distance is equal to an value of a length of line segment ab times a sine value of abc.

6. The method according to claim 4 or 5, wherein an x-axis and a y-axis of the first coordinate system are parallel to a ground;

when calculating the lengths of the line segment ab, the line segment bc and the line segment ac according to coordinate values of the three points a, b and c in the first coordinate system, a following formula is used for calculation:

$$l_{ab} = \sqrt{\left(x_a - x_b\right)^2 + \left(y_a - y_b\right)^2}$$

wherein $l_{ab}$ is the length of line segment ab; $x_a$ is a coordinate of point a on the x-axis; $x_b$ is a coordinate of point b on the x-axis; $y_a$ is a coordinate of point a on the y-axis; $y_b$ is a coordinate of point b on the y-axis;

$$l_{bc} = \sqrt{\left(x_b - x_c\right)^2 + \left(y_b - y_c\right)^2}$$

wherein $l_{bc}$ is the length of line segment bc; $x_c$ is a coordinate of point c on the x-axis; $x_b$ is the coordinate of point b on the x-axis; $y_c$ is a coordinate of point c on the y-axis; $y_b$ is the coordinate of point b on the y-axis;

$$l_{ac} = \sqrt{\left(x_a - x_c\right)^2 + \left(y_a - y_c\right)^2}$$

wherein $l_{ac}$ is the length of line segment ac; $x_c$ is the coordinate of point c on the x-axis; $x_a$ is the coordinate of point a on the x-axis; $y_c$ is the coordinate of point c on the y-axis; yis the coordinate of point a on the y-axis.

7. The method according to any of claims 3 to 5, wherein the anti-collision lines comprise a first anti-collision line segment extending from a front position of a tail end of the aircraft wing to a front position of an engine closest to a cabin door and a second anti-collision line segment extending from an end of the first anti-collision line segment near the cabin door to a side of the cabin door away from an aircraft nose.

8. The method according to any of claims 3 to 5, wherein the outer contour feature line segments comprise a first line segment and a second line segment respectively provided on both sides of a bridgehead of the boarding bridge, a third line segment disposed at a front end of the bridgehead and connected to the first line segment and the second line segment, and a fourth line segment and a fifth line segment respectively provided on both sides of a telescoping tunnel of the boarding bridge.

9. The method according to claim 8, wherein the plurality of outer contour feature points are sequentially arranged along an end portion of one end of the telescoping tunnel near the bridgehead.

10. The method according to claim 1, wherein, further comprising:

in case that the minimum distance between the outer contour model and the anti-collision line model is not less than the first threshold, then further judging whether the minimum distance is less than a second threshold, wherein the second threshold is greater than the first threshold; in case that the minimum distance is less than the second threshold, controlling the boarding bridge to decelerate.

11. The method according to claim 1, wherein a step of establishing the anti-collision line model in the first coordinate system comprises:

establishing the first coordinate system and a second coordinate system, both of which are fixed relative to a ground, and obtaining ground identification parameters in the first coordinate system and the second coordinate system, respectively; acquiring coordinates of a plurality of anti-collision feature points pre-established in the second coordinate system; performing coordinate transformation on the anti-collision feature points according to the ground identification parameters in the first coordinate system and the second coordinate system to obtain coordinates of the plurality of anti-collision feature points in the first coordinate system; connecting the anti-collision feature points in the first coordinate system in sequence according to a preset order to obtain the anti-collision line model in the first coordinate system.

12. The method according to claim 11, wherein before establishing the anti-collision line model in the first coordinate system, the method further comprises: ground identifications are used to guide the aircraft to park at the predetermined parking position, correcting coordinates of the plurality of anti-collision feature points in the second coordinate system according to a degree to which the aircraft deviates from the ground identifications when the aircraft is parked.

FIG. 1

FIG. 2

FIG. 3

FIG. 4

FIG. 5

# EP 4 015 396 A1

<table>
<tr><td colspan="2"></td><td>International application No.</td></tr>
<tr><td colspan="2" style="text-align:center"><strong>INTERNATIONAL SEARCH REPORT</strong></td><td><strong>PCT/CN2020/108962</strong></td></tr>
</table>

**A. CLASSIFICATION OF SUBJECT MATTER**

B64F 1/305(2006.01)i

According to International Patent Classification (IPC) or to both national classification and IPC

**B. FIELDS SEARCHED**

Minimum documentation searched (classification system followed by classification symbols)

B64F

Documentation searched other than minimum documentation to the extent that such documents are included in the fields searched

Electronic data base consulted during the international search (name of data base and, where practicable, search terms used)

CNKI, VEN, CNABS: 登机桥, 撞击, 防撞, 机翼, 外轮廓, 模型, 模拟, 阈值, 特征线, 特征点,; dock+, board+ bridge, collision, collid+, wing? , contour+, profil+, model+, simulat+, character+

**C. DOCUMENTS CONSIDERED TO BE RELEVANT**

| Category* | Citation of document, with indication, where appropriate, of the relevant passages | Relevant to claim No. |
|---|---|---|
| X | CN 108454875 A (CHINA INTERNATIONAL MARINE CONTAINERS (GROUP) LTD. et al.) 28 August 2018 (2018-08-28)<br>description, pages 4-7, and figures 1-9 | 1, 10 |
| A | CN 107985625 A (VATAPLE MACHINERY (KUNSHAN) CO., LTD.) 04 May 2018 (2018-05-04)<br>entire document | 1-12 |
| A | CN 101840205 A (CHINA INTERNATIONAL MARINE CONTAINERS (GROUP) LTD. et al.) 22 September 2010 (2010-09-22)<br>entire document | 1-12 |
| A | WO 2017137241 A1 (IFM ELECTRONIC GMBH) 17 August 2017 (2017-08-17)<br>entire document | 1-12 |
| A | KR 20130123997 A (HYUNDAI ROTEM COMPANY) 13 November 2013 (2013-11-13)<br>entire document | 1-12 |
| A | JP 01168599 A (SHIN MEIWA IND CO., LTD.) 04 July 1989 (1989-07-04) | 1-12 |
| A | JP 02182598 A (OBE KOGYO KK) 17 July 1990 (1990-07-17)<br>entire document | 1-12 |

☐ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **22 October 2020** | **10 November 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/108962**

| Patent document cited in search report | | | Publication date (day/month/year) | Patent family member(s) | | | Publication date (day/month/year) |
|---|---|---|---|---|---|---|---|
| CN | 108454875 | A | 28 August 2018 | None | | | |
| CN | 107985625 | A | 04 May 2018 | None | | | |
| CN | 101840205 | A | 22 September 2010 | None | | | |
| WO | 2017137241 | A1 | 17 August 2017 | DE | 102017201037 | A1 | 10 August 2017 |
| KR | 20130123997 | A | 13 November 2013 | KR | 101329092 | B1 | 14 November 2013 |
| JP | 01168599 | A | 04 July 1989 | JP | H01168599 | A | 04 July 1989 |
| | | | | JP | H0686238 | B2 | 02 November 1994 |
| JP | 02182598 | A | 17 July 1990 | JP | H02182598 | A | 17 July 1990 |

Form PCT/ISA/210 (patent family annex) (January 2015)

**REFERENCES CITED IN THE DESCRIPTION**

**Patent documents cited in the description**

• CN 201910750379